# FASCICULE DE BREVET EUROPEEN

(11) **EP 2 509 769 B1**
(45) Date de publication et mention de la délivrance du brevet: **23.10.2013**
(21) Numéro de dépôt: 10799085.5
(22) Date de dépôt: 19.11.2010
(51) Int. Cl.: B29C 49/42, B29C 49/36, B65G 47/84, B29C 49/48

(54) **MACHINE ET PROCÉDÉ DE SOUFFLAGE AVEC PRÉCHARGEMENT DES PRÉFORMES**
BLASFORMMASCHINE UND VERFAHREN MI VORLADUNG VON VORFORMEN
BLOW MOLDING MACHINE AND METHOD, INCLUDING PRELOADING OF PREFORMS

(30) Priorité: 08.12.2009 FR 0958764
(43) Date de publication de la demande: 17.10.2012
(73) Titulaire: Sidel Participations, 76930 Octeville sur Mer (FR)
(72) Inventeur: MICHEL, Jocelyn, F-76930 Octeville S/mer (FR)
(74) Mandataire: Cabinet Plasseraud
(86) Numéro de dépôt international: PCT/FR2010/052454
(87) Numéro de publication internationale: WO 2011/070261

(56) Documents cités:
- DE-A1- 10 325 693
- DE-A1- 19 933 847
- DE-A1-102004 057 102

## Description

L'invention concerne une machine de moulage de récipients par soufflage ou étirage-soufflage d'une préforme dans un moule, et plus particulièrement un dispositif pour alimenter en préforme les moules des différentes unités de moulage disposées sur le carrousel de ladite machine.

Par la demande FR 2 479 077, on connaît une machine de soufflage de préformes de récipients dans laquelle un bras de manipulation est associé à chacune des unités de moulage. Le bras de manipulation maintient la préforme en cours de transformation en récipient à l'intérieur du moule. En fin de cycle de moulage, le moule s'ouvre et le bras entraîne le récipient moulé et le lâche dans une goulotte d'évacuation. Ensuite, le bras de manipulation vient saisir une nouvelle préforme sur un poste de transfert de préformes et ramène la préforme saisie dans le moule associé audit bras pour qu'elle soit transformée en un nouveau récipient. Chacune des unités de moulage est inutilisée pour du moulage durant la somme des durées nécessaires à l'évacuation du récipient moulé, puis à la saisie d'une nouvelle préforme et à l'introduction de cette préforme dans le moule. Une telle machine est particulièrement lente. Le fait de lâcher le récipient moulé dans une goulotte limite la cadence en raison de la légèreté du récipient qui chute lentement. Un tel moyen d'alimentation en préforme n'est pas compatible avec les temps de cycle actuellement pratiqués par les machines d'étirage-soufflage. Le temps de cycle incluant, pour une unité de moulage donnée, l'ensemble des phases de soufflage et le remplacement du récipient moulé par une nouvelle préforme ; ce temps est actuellement inférieur à deux secondes. Des machines produisant 100 000 bouteilles par heure sont envisagées. Une augmentation de la cadence des machines de soufflage impose de réduire le temps nécessaire pour remplacer le récipient moulé par une nouvelle préforme.

Par le document DE 103 25 693, on connaît une servante de machine de soufflage de bouteilles constituée par une roue de transfert unique comprenant deux séries alternées de bras de manipulation. Pour chaque unité de moulage, le bras d'alimentation en préforme est situé à côté du bras d'évacuation de la bouteille précédemment moulée. Un inconvénient d'une telle machine est que les deux bras d'alimentation et d'évacuation se gênent mutuellement. Le bras d'alimentation en préforme doit être en position rétractée pour que le bras d'évacuation atteigne la cavité du moule. Le bras d'alimentation en préforme ne peut se déployer qu'après que la bouteille précédemment moulée a été non seulement sortie de la cavité de moulage, mais également déviée de la trajectoire du bras d'alimentation en préforme. Il en résulte une roue de transfert complexe et une limitation de la cadence de la machine de moulage. En effet, il faut que les deux opérations d'extraction de la bouteille et d'alimentation en préformes aient eu lieu alors que l'unité de moulage concernée est encore dans le voisinage de la roue unique de transfert.

Par les demandes DE 199 33 847 et WO 2009 010505, on connaît une machine de soufflage de récipients comprenant une succession d'unités de moulage entraînées par un carrousel. Chaque unité de moulage passe d'abord en regard d'une roue d'évacuation de la bouteille venant d'être moulée, puis passe devant une deuxième roue d'alimentation en préformes. Une telle machine permet une cadence plus rapide du carrousel que la machine précédente. Cependant, l'unité de moulage est inutilisée durant tout le transit de l'unité de moulage concernée depuis une position en regard de la roue d'évacuation et une position en regard de la roue d'alimentation en préformes.

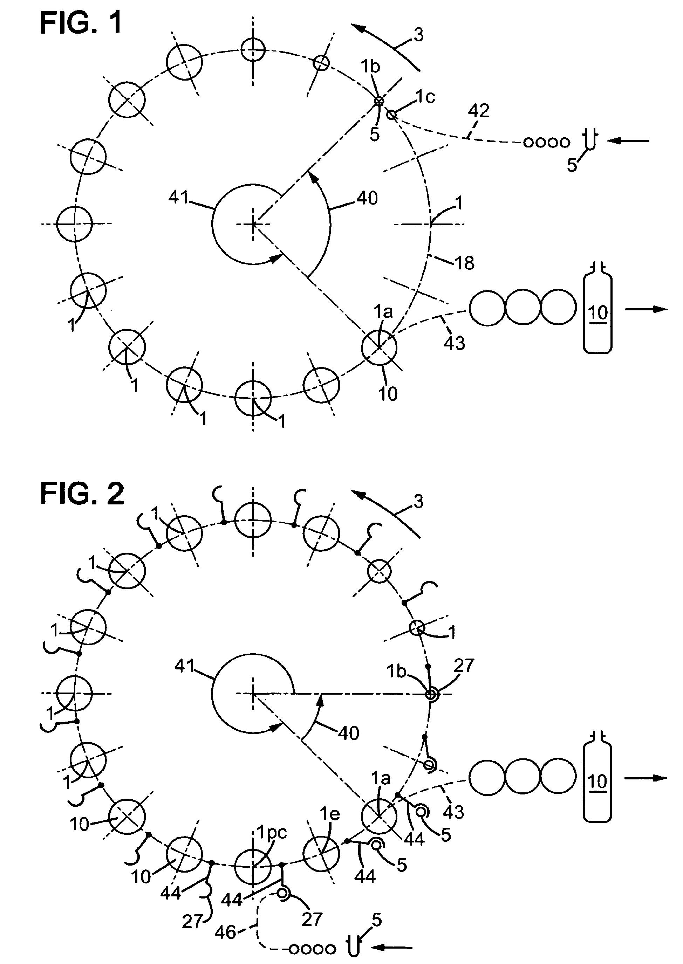

On a schématisé en figure 1, une machine conventionnelle d'étirage/soufflage de récipients 10. Une préforme 5 chemine depuis une phase d'amenée où un moyen d'amenée 42 amène la préforme 5 sur une trajectoire 18 d'un carrousel non représenté, jusqu'à une phase d'évacuation où un moyen d'évacuation 43 extrait les récipients moulés 10 hors du carrousel. Le carrousel comprend une pluralité d'unités 1 de moulage indiquées par un simple trait d'axe sur la trajectoire 18.

La trajectoire 18 du carrousel comprend une position la de déchargement des récipients 10 venant d'être moulés. La trajectoire 18 du carrousel comprend une position 1c de chargement au cours duquel une unité de moulage coopère avec des moyens 42 d'amenée de la préforme 5 jusqu'à ce que la préforme 5 soit solidaire de l'unité 1 de moulage. La préforme est disposée dans une position de moulage à l'intérieur de l'unité de moulage lorsque cette dernière arrive dans une position 1b de début de moulage. Le moule se ferme et l'unité de moulage poursuit sa trajectoire le long d'un secteur 41 de moulage. Dans le secteur de moulage 41, les unités 1 de moulage contiennent une préforme 5 en cours de transformation en récipient 10. Le secteur complémentaire du secteur 41 de moulage est un secteur 40 de remplacement, le long duquel le moule non représenté des unités de moulage s'ouvre pour permettre l'évacuation du récipient 10 venant d'être moulé (position 1a) et l'introduction d'une nouvelle préforme 5 dans ledit moule (position 1b).

Dans la machine décrite par DE 10325693, la position de chargement 1c précède la position 1b où la préforme est positionnée dans la cavité de moulage. Dans les machines décrites par DE 19933847, DE 10 2004 057102 ou WO 2009010505, les préformes sont prises en charge par l'unité de moulage directement à leur position de moulage. Donc la position 1c de chargement est antérieure et quasiment confondue avec la position 1b de début de moulage. Dans tous les cas, la position 1c de chargement des préformes 5 est située dans le secteur 40 de remplacement.

L'invention vise à remédier à au moins l'un des inconvénients précités et en particulier à réduire le temps de remplacement dans un moule de l'unité de moulage du récipient précédemment moulé par la préforme du futur récipient, sans ralentir la cadence du carrousel.

Selon un mode de réalisation, la machine de fabrication de récipients par soufflage ou étirage/soufflage d'une préforme est selon la revendication 1.

La préforme destinée au moulage du récipient suivant est transférée à l'unité de moulage avant que la cavité de moulage ne soit libre. Le moyen de positionnement embarqué sur l'unité de moulage peut préparer le transfert de la préforme vers la position de moulage dans la cavité de moulage sans être gêné par le mouvement relatif entre l'unité de moulage et le moyen d'amenée. Le remplacement par une nouvelle préforme du récipient venant d'être moulé ne doit être synchronisé qu'avec le moyen d'évacuation. Cela permet d'optimiser la durée de remplacement du récipient moulé par une nouvelle préforme et de réduire la durée de non utilisation des unités de moulage. Cela permet aussi de réduire et/ou de modifier l'encombrement global de la machine de fabrication.

Par exemple, chaque unité de moulage peut comprendre un moyen de tenue des préformes en position de moulage, lequel moyen de tenue est apte à coopérer avec le moyen de positionnement pour recevoir la préforme et libérer le moyen de capture et à coopérer avec le moyen d'évacuation pour relâcher le récipient.

Par exemple, les unités de moulage peuvent être aptes à ne pas déformer un col des préformes au cours de la transformation des préformes en récipients. Le moyen de tenue peut présenter une complémentarité de forme avec ledit col.

Par exemple, le moyen de tenue peut être constitué par des formes ménagées dans la cavité de moulage.

Selon un mode de réalisation, le moyen de positionnement de chaque unité de moulage comprend un bras auxiliaire à l'extrémité duquel est situé le moyen de capture de ladite unité de moulage, laquelle extrémité est mobile au moins entre une position de préchargement et une position de moulage.

Par exemple, la cavité de moulage de chaque unité de moulage peut présenter un axe principal et un plan de joint de la cavité de moulage sensiblement perpendiculaire à une trajectoire d'entraînement du carrousel à l'endroit de ladite unité de moulage. L'axe principal de la cavité correspond à l'axe du goulot du récipient. Une telle disposition du plan de joint permet d'augmenter la densité d'implantation des unités de moulage sur le carrousel.

Par exemple, le bras auxiliaire peut être mobile en rotation autour d'un axe auxiliaire, à distance du plan de joint de la cavité de moulage et parallèle à l'axe principal de la cavité de moulage. Lorsque l'axe principal correspond à l'axe de plus grande longueur du récipient, une telle disposition permet d'introduire la préforme avec une ouverture réduite du moule.

Par exemple, le bras auxiliaire peut ne pas être télescopique, l'axe de rotation du bras auxiliaire étant situé dans un plan, perpendiculaire au plan de joint de la cavité de moulage, et passant par l'axe principal de la cavité de moulage. Un tel bras est particulièrement simple de conception et d'une fiabilité adaptée aux cadences élevées.

Selon un mode de réalisation, le bras auxiliaire peut être situé en amont de la cavité de moulage dans le sens d'entraînement du carrousel. Cela facilite l'accès aux récipients venant d'être moulés. Le moyen d'évacuation est fixe par rapport à la machine. Le fait de dégager le côté aval du moule permet d'accélérer la cadence du carrousel.

Selon un mode de réalisation, le bras auxiliaire comprend un mécanisme de pinces dissymétriques comportant une grande branche munie d'une forme de capture de la préforme et une petite branche, lesquelles grande et petite branches forment des prolongements de deux côtés opposés d'un parallélogramme déformable entre une configuration d'ouverture où la petite branche ne fait pas obstacle à l'introduction de la préforme dans la forme de capture et une configuration de fermeture où la petite branche plaque la préforme dans la forme de capture. La mâchoire est conçue pour qu'en configuration d'ouverture, une préforme puisse s'introduire entre la mâchoire et l'extrémité de la petite branche selon une direction sensiblement perpendiculaire au bras auxiliaire cela facilite l'introduction de la nouvelle préforme et raccourcit encore le secteur de remplacement du carrousel.

Selon un mode de réalisation, le moyen d'amenée des préformes est une roue d'amenée équipée d'une pluralité de bras terminés chacun par un moyen de capture d'une préforme, lequel moyen de capture est conçu pour coopérer avec le moyen de capture d'une unité de moulage lorsque cette dernière est en position de chargement en préforme. La roue d'amenée est un dispositif de transfert particulièrement simple et bien adapté à des cadences élevées de chargement des préformes.

Selon un mode de réalisation, la machine comprend une roue d'évacuation équipée d'une pluralité de bras terminés chacun par un moyen de capture de récipient moulé, chacun des bras étant télescopique entre une position sortie et une position rentrée.

Avantageusement, la roue d'amenée est disposée plus proche de la roue d'évacuation du coté amont de ladite roue d'évacuation que du coté aval de ladite roue d'évacuation. Le côté amont et le côté aval de la roue d'évacuation sont pris le long de la trajectoire d'entraînement du carrousel.

Selon un autre aspect, l'invention porte sur un procédé de fabrication de récipients utilisant une pluralité d'unités de moulage, procédé dans lequel on extrait d'une unité de moulage le récipient moulé, puis on introduit une préforme dans la même unité de moulage pour mouler le récipient suivant. On précharge sur ladite unité de moulage la préforme du récipient suivant avant d'extraire le récipient moulé précédemment. Le préchargement de la préforme sur l'unité de moulage avant l'extraction du récipient permet d'optimiser, dans le cycle de façonnage d'un récipient, la phase d'introduction de la préforme dans le moule dès que le récipient moulé a cessé d'occuper l'espace destiné à la future préforme. Le préchargement de la préforme permet également de découpler le lieu d'alimentation en préformes et le lieu d'évacuation des récipients. Le moyen d'amenée de préformes peut alors être situé à n'importe quelle distance du moyen d'évacuation des récipients ; cela permet d'optimiser l'encombrement global de la machine de fabrication et de faciliter son implantation.

Le préchargement d'une préforme peut, par exemple, utiliser un bras auxiliaire équipant l'unité de moulage correspondante dans une position (A) de préchargement du bras. Dans ce procédé, avant que l'unité de moulage arrive en position de début de moulage, on déplace le bras auxiliaire pour amener la préforme dans la cavité de moulage et on ramène le bras auxiliaire dans la position (A') de préchargement du bras après le début de moulage et avant que l'unité de moulage n'arrive de nouveau dans une position de préchargement.

Par exemple, l'extraction du récipient moulé peut utiliser un moyen d'évacuation et dans lequel on amène le bras auxiliaire dans une position (B) d'évitement plus amont, dans le sens d'entraînement du carrousel, que la position (A) de préchargement du bras, afin de faciliter l'accès du moyen d'évacuation au récipient à extraire.
- la figure 1 est un schéma illustrant la transformation de la préforme en récipient selon un ETAT DE LA TECHNIQUE,

La présente invention sera mieux comprise à l'étude de la description détaillée de quelques modes de réalisation pris à titre d'exemples nullement limitatifs et illustrés par les dessins annexés sur lesquels :
- la figure 2 est un schéma illustrant la transformation de la préforme en récipient selon l'invention,
- la figure 3 est une vue d'ensemble d'un mode de réalisation de la machine selon l'invention,
- la figure 4 est un schéma illustrant le remplacement du récipient précédemment moulé par la préforme,
- la figure 5 est une vue de dessus du bras auxiliaire au début de la phase de capture de la préforme de la roue d'amenée, et
- la figure 6 est une vue de dessus du bras auxiliaire en fin de phase de capture de la préforme de la roue d'amenée.

La figure 2 illustre le cheminement des préformes 5 et des récipients 10 correspondants, dans une machine de soufflage selon l'invention. La machine comprend une pluralité d'unités de moulage 1 entraînées le long d'une trajectoire 18 de carrousel dans le sens de défilement indiqué par la flèche. La trajectoire 18 comprend un secteur 41 de moulage et un secteur 40 de remplacement du récipient 10 moulé par une nouvelle préforme 5. Les préformes 5 sont amenées au carrousel par un moyen 46 d'amenée jusqu'à un moyen 27 de capture de préforme associé à une unité de moulage se trouvant dans une position « 1pc » du carrousel dédiée au préchargement en préforme. Plus précisément, la position « 1pc » de préchargement correspond à l'instant où la préforme 5 est transférée du moyen 46 d'amenée au moyen 27 de capture.

La position « 1pc » de préchargement se situe à l'intérieur du secteur 41 de moulage. Autrement dit, lors du préchargement de la nouvelle préforme 5, l'unité de moulage passant par la position « 1pc » de préchargement en préforme contient encore son récipient 10 qui est encore en position de moulage.

Ainsi, chacune des unités 1 de moulage pénétrant dans le secteur 40 de remplacement, à sa disposition, une préforme 5 logée dans le moyen 27 de capture de l'unité 1 de moulage.

Lorsqu'une unité de moulage entre dans le secteur 40 de remplacement en passant par la position 1a de la trajectoire 18 du carrousel dédiée au déchargement des récipients 10 venant d'être moulés, ledit récipient est transféré de l'unité de moulage au moyen 43 d'évacuation et commence à quitter sa position de moulage dans l'unité de moulage.

Ensuite, un moyen 44 de positionnement déplace la préforme 5 capturée par le moyen 27 de capture vers une position de moulage. L'unité de moulage atteint la position « 1b » de début de moulage lorsque la préforme 5 est en position de moulage.

Dans le mode de réalisation illustré en figure 2, le moyen 44 de positionnement comprend, de manière avantageuse mais non indispensable, le moyen 27 de capture de l'unité de moulage. Le moyen 44 de positionnement se trouve, par rapport à son unité de moulage, dans une position permettant une prise en charge de la préforme lorsque ladite unité de moulage passe par la position « 1pc » de préchargement et se trouve dans une position de mise en place lorsqu'il passe par la position « 1b ».

Avantageusement, les unités 1 de moulage se trouvant dans une position d'évitement « 1e » située entre la position « 1pc » de préchargement en préforme et la position « 1b » de déchargement des récipients, présentent un moyen 44 de positionnement décalé du côté amont de la trajectoire 18 pour faciliter l'accès du moyen d'évacuation 43 au récipient 10 à extraire.

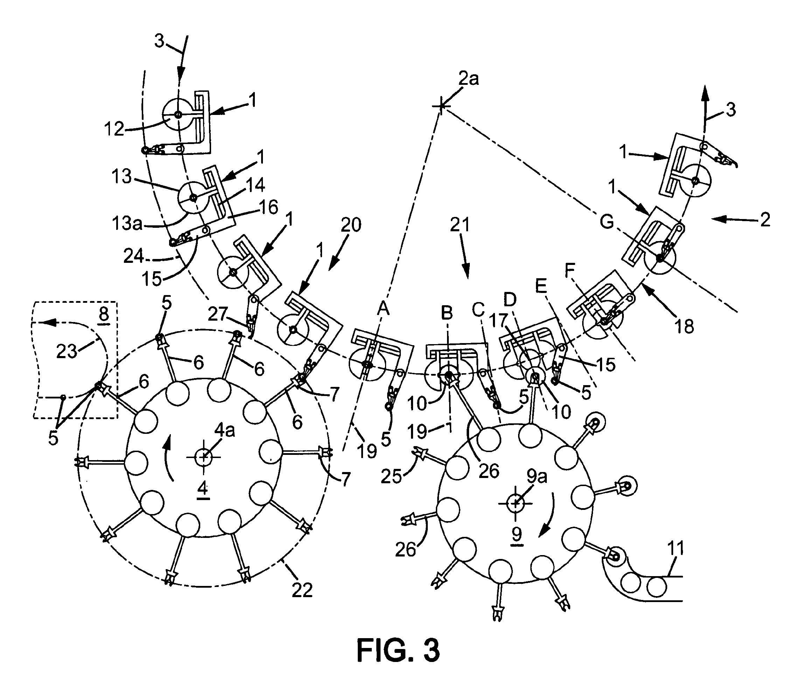

Comme illustré sur la figure 3, la machine de fabrication de récipients par soufflage ou étirage-soufflage comprend une pluralité d'unités 1 de moulage disposées à la périphérie d'un carrousel 2 et entraînées dans un sens d'entraînement du carrousel indiqué par une flèche 3 sur la figure 3. La machine de fabrication de récipients comprend également une roue 4 d'amenée des préformes 5 sur le carrousel 2 équipée de bras 6 qui comportent chacun une pince 7. Ces pinces 7 permettent d'alimenter chaque unité 1 de moulage à partir d'un organe 8 de sortie d'un four de préchauffage des préformes 5.

La machine de fabrication comprend également une roue 9 d'évacuation des récipients 10 moulés vers une goulotte 11 d'évacuation.

Chaque unité 1 de moulage 1 comprend un moule constitué notamment de deux demi-moules 13,13a complémentaires de moule, un mécanisme 14 d'ouverture desdites demi-moules 13 et 13a complémentaires et un bras 15 auxiliaire monté à rotation sur un bâti 16 de l'unité 1 de moulage. Chaque unité 1 de moulage comprend une cavité 12 de moulage présentant un axe 17 principal. Par exemple, lorsque le récipient 10 est une bouteille allongée, l'axe 17 principal de chaque unité 1 de moulage correspond à l'axe principal du goulot de ladite bouteille et de la préforme 5. Les différents axes 17 principaux de chacune des unités 1 de moulage sont parallèles entre eux et à l'axe 2a du carrousel. Ils sont aussi disposés le long d'une trajectoire 18 circulaire qui est centrée autour dudit axe 2a du carrousel 2.

La cavité 12 de moulage de chacune des unités 1 de moulage présente un plan de joint 19 radial, passant par l'axe 2a du carrousel. Ainsi, lorsque le mécanisme d'ouverture 14 est actionné, les demi-moules 13 et 13a du moule sont entraînés selon deux translations opposées de part et d'autre du plan de joint 19 est selon une direction tangente à la trajectoire circulaire 18. L'ouverture de la cavité 12 de moulage libère le récipient moulé 10 selon une direction radiale par rapport à l'axe central 2a du carrousel.

Chaque bras 15 auxiliaire de chaque unité 1 de moulage est monté en rotation sur le bâti 16 de l'unité 1 de moulage correspondante, autour d'un axe 15a auxiliaire parallèle à l'axe 17 principal, situé à distance et en amont dudit plan de joint 19, et sensiblement sur la trajectoire circulaire 18.

La roue 4 d'amenée et la roue 9 d'évacuation sont mobiles en rotation autour respectivement d'un axe 4a et d'un axe 9a fixes par rapport au sol d'implantation de la machine de fabrication, lesquels axes 4a et 9a sont parallèles à l'axe 2a du carrousel et sont situés à l'extérieur de la trajectoire circulaire 18 des unités 1 de moulage. La trajectoire circulaire 18 présente une position 20 de chargement dans laquelle les unités de moulage 1 coopèrent avec la roue d'amenée 4 pour recevoir une nouvelle préforme 5. La position 20 de chargement est la position de la trajectoire 18 qui est sensiblement en regard de la roue 4 d'amenée. La position 20 de chargement est dans l'alignement de l'axe 2a du carrousel et de l'axe 4a de la roue 4 d'amenée. La trajectoire circulaire 18 présente également une position 21 de déchargement des unités 1 de moulage. La position 21 de déchargement est située sensiblement dans l'alignement de l'axe 2a du carrousel et de l'axe 9a de la roue 9 d'évacuation.

La roue 4 d'amenée est située en amont de la roue 9 d'évacuation dans le sens d'entraînement 3 du carrousel. Autrement dit, la portion de la trajectoire 18 d'entraînement du carrousel allant de la position 20 de chargement à la position 21 de déchargement est plus courte que la trajectoire complémentaire par laquelle une unité 1 de moulage parcourt le reste du chemin depuis le déchargement 21 jusqu'au chargement 20, et au cours de laquelle un nouveau récipient 10 est façonné à partir de la préforme 5.

On va maintenant décrire les opérations de chargement et de déchargement d'une unité 1 de moulage.

Les bras 6 de manipulation de la roue 4 d'amenée ne sont ni télescopiques ni mobiles en rotation sur la roue 4 d'amenée. La roue 4 d'amenée est ainsi un mécanisme particulièrement simple et fiable à cadence élevée. Les pinces 7 d'extrémité des bras 6 de manipulation parcourent une trajectoire circulaire 22, laquelle coupe une trajectoire 23 d'amenée des préformes 5 de l'organe de sortie 8 du four de préchauffage. Avantageusement, les trajectoires 22 et 23 sont tangentes. La vitesse de rotation de la roue 4 d'amenée est telle que la vitesse curviligne de la pince 7 d'extrémité le long de la trajectoire 22 est identique à la vitesse curviligne de la préforme 5 le long de la trajectoire 23. L'organe 8 de sortie du four de préchauffage est équipé d'un moyen de tenue des préformes 5 le long de la trajectoire 23, escamotable à partir du point de rencontre avec la trajectoire 22. De même, la pince 7 d'extrémité du bras 6 de manipulation est en position ouverte, apte à recevoir la préforme 5 en amont de ce point de rencontre. La pince 7 se ferme en arrivant au point de rencontre et capture la préforme 5 qui suit alors la trajectoire 22.

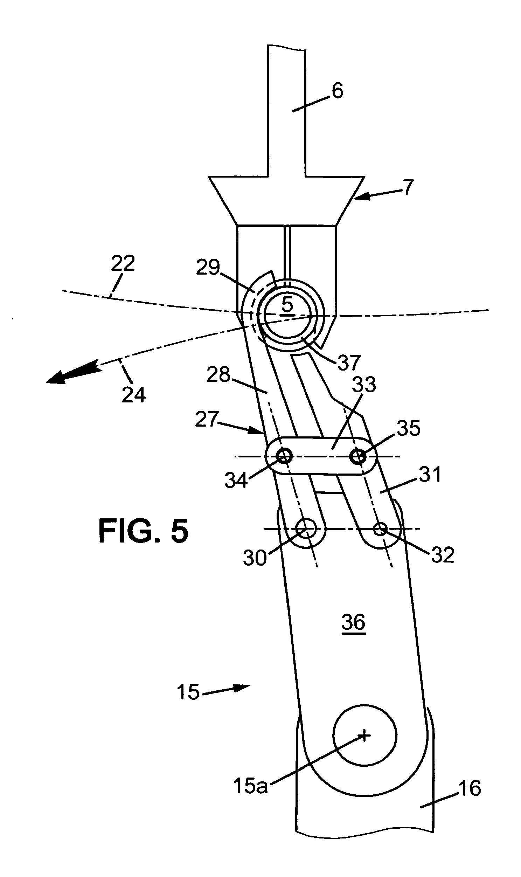

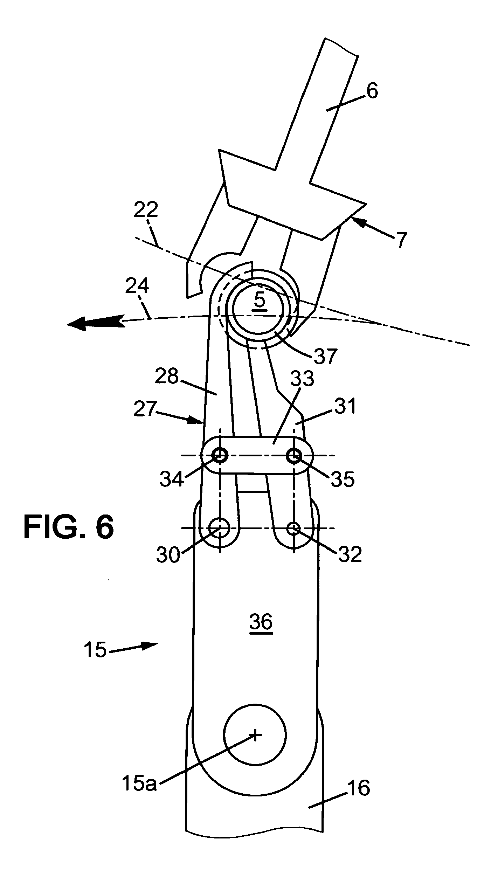

La trajectoire 22 des préformes 5, lorsqu'elles sont montées dans les pinces 7 d'extrémité, coupe une trajectoire 24 correspondant à celle des moyens 27 de captures qui sont situés à l'extrémité du bras 15 auxiliaire, lequel bras sera détaillé aux figures 5 et 6. Les vitesses de rotation de la roue 4 d'amenée et du carrousel 2 sont synchronisées de manière que, lorsque les moyens 27 de capture du bras 15 auxiliaire prennent en charge la préforme 5, la pince 7 d'extrémité s'ouvre et la préforme 5 est chargée sur ledit bras 15 auxiliaire de l'unité 1 de moulage.

La roue 9 d'évacuation est équipée d'une pluralité de pinces 25 situées en extrémité de bras 26 de manipulation télescopiques. Les pinces 25 d'extrémité sont par exemple identiques aux pinces 7 des bras 6 et comprennent deux doigts symétriques pouvant s'écarter pour recevoir un objet et se serrer sur l'objet. Les bras 26 de manipulation s'étendent le long d'un axe fixe par rapport à la roue 9 d'évacuation de sorte que le mécanisme d'évacuation est simple et fiable.

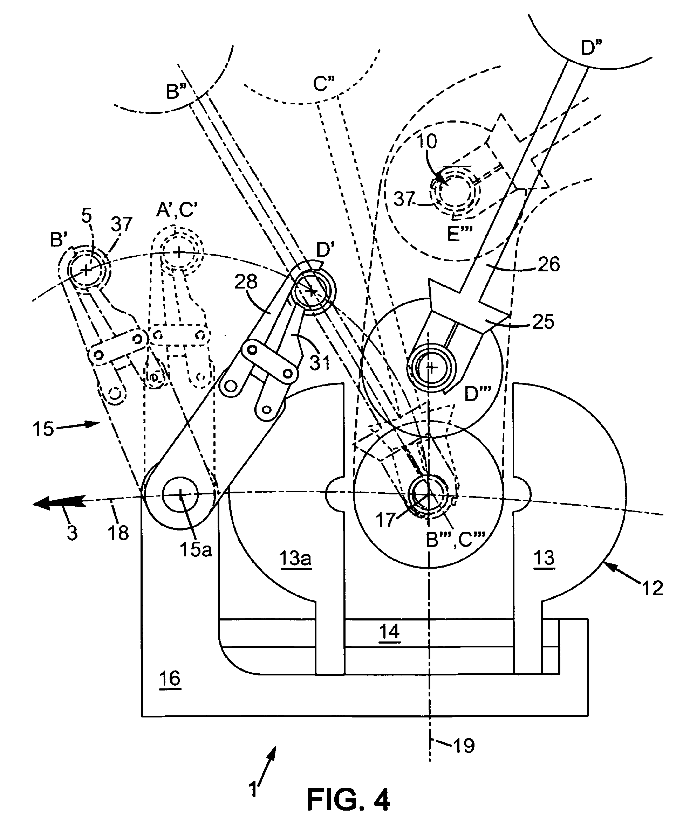

On va maintenant décrire, à l'aide des figures 3 et 4, la séquence de remplacement du récipient 10 qui a été précédemment moulé par une nouvelle préforme 5. Au cours de cette séquence de remplacement, une unité 1 de moulage illustrée en figure 4 se déplace le long de la trajectoire 18 du carrousel 2 selon des positions successives A, B, C, D, E, F, G repérées figure 3, au cours desquelles ladite unité 1 de moulage présente les configurations correspondantes superposées en figure 4.

La figure 4 illustre les positions correspondantes A',B',C',D' du bras 15 auxiliaire; les positions correspondantes B", C", D" de la roue 9 d'évacuation ; et les positions correspondantes B"', C"', D"', E"' du récipient moulé 10.

La configuration correspondant à la position A est celle du début d'ouverture de moule ; le bras 15 auxiliaire est en position A' de repos avec la préforme 5, comme illustrée en pointillés courts sur la figure 4.

La configuration correspondant à la position B est celle de l'accostage de la pince 25 d'extrémité d'un bras 26 de manipulation de la roue 9 d'évacuation sur le goulot 37 du récipient 10 déjà moulé et encore maintenu centré dans l'unité 1 de moulage.

Entre les positions A et B, le bras 15 auxiliaire est amené dans une position B' d'évitement plus amont dans le sens de défilement du carrousel que la position A' de préchargement afin de faciliter l'accès du bras 26 de manipulation de la roue 9 d'évacuation à l'axe 17 principal de l'unité 1 de moulage sur lequel ledit bras 26 de manipulation doit intervenir. En position B d'accostage de la pince 25 d'extrémité sur le récipient 10, le bras 26 de manipulation est en position sortie et présente un angle par rapport au plan de joint 19 d'ouverture du moule compris entre 15 et 45 degrés. La position B' d'évitement du bras 15 auxiliaire est sensiblement parallèle à la direction du bras 26 de manipulation en configuration d'accostage B.

La configuration correspondant à la position C est celle de la fin de la capture du récipient 10 par la pince 25 d'extrémité du bras 26 de manipulation. Cela peut correspondre à la fin de l'ouverture de la cavité 12 de moulage. En position C"', le récipient 10 coïncide encore avec l'axe 17 principal de l'unité 1 de moulage, mais n'est plus maintenu par cette unité 1 de moulage et est solidaire du bras 26 de manipulation de la roue 9 d'évacuation. Entre les positions B" et C", le bras 26 de manipulation s'est raccourci de manière que sa pince 25 d'extrémité soit entraînée par la roue 9 d'évacuation le long de la trajectoire 18 du carrousel 2. Comme illustré en figure 4, l'axe du bras 26 de manipulation en configuration C présente un angle d'inclinaison, par rapport au plan de joint 19 du côté amont de l'unité 1 de moulage, inférieur à 30 degrés, et de préférence inférieur à 10 degrés.

La configuration illustrée en traits pleins sur la figure 4 est celle correspondant à la position D' du bras 15 et correspond à une position de "remplacement imminent". En configuration de remplacement imminent du récipient moulé 10 par la préforme 5, le bras 26 de manipulation est incliné par rapport au plan de joint 19 radial du moule du côté aval de l'unité 1 de moulage avec un angle inférieur à 30 degrés. Entre les configurations correspondant aux positions C" et D", le bras 26 de manipulation se raccourcit rapidement de manière à accélérer l'extraction du récipient moulé 10 selon une trajectoire radiale sensiblement confondue avec le plan de joint 19 du moule 12. Au cours de la phase radiale du mouvement d'évacuation du récipient moulé 10, le bras 15 auxiliaire s'incline en direction aval de remplacement imminent.

La configuration correspondant à la position E de l'unité de moulage est celle du début d'introduction de la préforme 5 dans la cavité 12 de moulage. Pour la clarté de la figure 4, le bras 15 n'a pas été représenté dans cette configuration E"', seule la position du bras 26 et du récipient 10 a été illustrée en pointillés longs. Le récipient moulé 10 ne fait plus obstacle au pivotement du bras 15 auxiliaire qui peut alors commencer à introduire la préforme 5 dans les demi-moules 13 et 13a. La configuration correspondant à la position E correspond également à un début de fermeture de la cavité 12 de moulage.

La configuration correspondant à la position F est celle de l'introduction de la préforme 5 dans la cavité 12 de moulage.

La configuration correspondant à la configuration G, est celle de fin de fermeture de la cavité 12 de moulage. Ensuite, le bras 15 auxiliaire revient vers sa position de repos.

Le caractère télescopique des bras 26 de manipulation permet à la pince 25 d'extrémité correspondante de coïncider avec l'axe 17 de l'unité 1 de moulage avec lequel elle va interagir sur une portion ajustable de la trajectoire circulaire 18. Le caractère télescopique des bras 26 permet également d'ajuster la trajectoire d'évacuation du récipient 10 qui vient d'être moulé.

La pince 25 d'extrémité du bras 26 de manipulation télescopique est mobile axialement entre une position sortie (configurations B", C", D") et une position rentrée. L'évacuation du récipient 10 après moulage peut se produire entre les configurations C" et D" correspondant à une inclinaison réduite du bras 26 de manipulation par rapport au plan de joint 19 radial de la cavité 12 de moulage. Autrement dit, l'évacuation du récipient 10 est sensiblement radiale. De plus, le caractère télescopique du bras 26 permet de faire précéder la phase d'évacuation radiale du récipient 10, d'une phase d'accostage de la pince 25 entre les configurations B" et C". Le caractère télescopique du bras 26 de manipulation permet de réduire fortement la longueur de la portion de trajectoire 18 séparant les configurations B à D.

Le fait que la roue 4 d'amenée soit en amont de la roue 9 d'évacuation permet de réduire la portion de trajectoire s'étendant des configurations D à F, c'est-à-dire que l'introduction de la préforme 5 dans la cavité 12 de moulage peut immédiatement suivre le début d'évacuation du récipient 10 précédemment moulé. Cela permet de réduire la durée de remplacement du récipient 10 moulé par une autre préforme 5. Cela réduit la longueur globale de la trajectoire 18 des unités 1 de moulage du carrousel 2. Cela réduit l'encombrement de la machine de fabrication.

De plus, le fait que les préformes 5 soient chargées sur l'unité 1 de moulage avant le début d'évacuation du récipient 10 qui vient d'être moulé, permet à la roue 4 d'amenée d'être située à distance de la roue 9 d'évacuation. Cela simplifie la conception globale de la machine de fabrication car l'emplacement des moyens 8 et 4 nécessaires à l'alimentation en préformes et l'emplacement de moyens 9 d'évacuation des récipients moulés sont rendus spatialement indépendants l'un de l'autre.

On va maintenant, à l'aide des figures 5 et 6, décrire le moyen 27 de capture de préforme équipant le bras 15 auxiliaire. Le moyen 27 de capture est disposé à l'extrémité d'une partie 36 principale du bras 15. Le moyen 27 de capture comprend un mécanisme de pinces dissymétriques comportant une grande branche 28 munie d'une mâchoire 29. La grande branche 28 est montée à rotation sur la partie 36 principale du bras 15 autour d'un premier axe 30 du moyen 27 de capture. Le moyen 27 de capture comprend également une petite branche 31 montée à rotation sur la partie 36 principale autour d'un deuxième axe 32 du moyen de capture. Le moyen 27 de capture comprend également une biellette de liaison 33 reliée à la grande branche 28 par une première articulation 34 et à la petite branche 31 par une deuxième articulation 35. Les premier et deuxième axes 30, 32 ainsi que les première et deuxième articulations 34, 35 forment un parallélogramme déformable entre une position d'ouverture illustrée en figure 5 dans laquelle la petite branche 31 ne fait pas obstacle à l'introduction de la préforme 5 dans la forme de capture 29, et une position de fermeture illustrée en figure 6 dans laquelle la petite branche 31 plaque la préforme 5 dans la forme de capture 29 de ladite grande branche 31.

Lorsque le bras 15 est en position de repos sensiblement perpendiculaire à la trajectoire 18 du carrousel 2, la grande branche 28 du moyen 27 de capture est disposée à l'avant de la petite branche 31 de la mâchoire 29 et s'étend en arc de cercle vers l'arrière de la grande branche 28, c'est-à-dire vers la petite branche 31. L'extrémité de la petite branche 31 et la mâchoire 29 constitue le moyen 27 de capture, ouvert selon une direction perpendiculaire au bras 15, vers l'arrière du bras 15.

Durant la fermeture de la cavité 12 de moulage, c'est-à-dire quand l'unité de moulage est entre les configurations F et G, le bras 15 reste pivoté sensiblement parallèle à la trajectoire 18 du carrousel 2, de manière que la préforme 5 soit en position de moulage le temps que la cavité 12 de moulage retienne la préforme et que le moyen 27 de capture la lâche.

L'ouverture du moyen 27 de capture du bras 15 est alors perpendiculaire à la trajectoire 18 du carrousel 2. Cela facilite l'introduction de la préforme 5 dans la cavité 12 de moulage par une simple déformation inverse du parallélogramme constitué par les grande et petite branches 28,31 du moyen 27 de capture. L'orientation de la mâchoire 29, perpendiculaire du bras 15 permet d'accélérer l'introduction de la préforme. Cela réduit d'autant le secteur 40 de remplacement du carrousel 2.

Des variantes de la machine de fabrication illustrée conviennent également ; par exemple, la trajectoire 18 des unités de moulage 1 peut ne pas être circulaire. Le moule peut être du type moule portefeuille dans lequel les demi-moules complémentaires 13 et 13a s'ouvrent par pivotement autour d'un axe contenu dans le plan de joint 19 radial et sensiblement parallèle à l'axe 17 principal. De manière alternative, le moule peut être du type moule-tulipe dans lequel les demi-moules complémentaires 13 et 13a pivotent autour d'un axe d'ouverture de moule, également compris dans le plan de joint 19 radial, mais perpendiculaire à l'axe 17 principal du moule.

Selon une autre variante, le bras 15 auxiliaire peut être mobile selon n'importe quel type de déplacement s'étendant entre une position de chargement de la préforme et une position d'introduction de la préforme 5 dans la cavité 12 de moulage.

Selon une autre variante, le bras 15 auxiliaire est équipé d'un moyen de capture passif de la préforme. Le dispositif d'alimentation en préformes peut comprendre un ou une pluralité de bras de transfert des préformes depuis la trajectoire 23 du four de préchauffage jusqu'au moyen de capture passif du bras 15 auxiliaire. Dans cette variante, le bras 15 auxiliaire est néanmoins pourvu d'un moyen d'introduction actif permettant de lâcher la préforme 5 à l'endroit souhaité dans la cavité 12 de moulage.

Selon une autre variante, chaque unité 1 de moulage peut être équipée de plusieurs cavités de moulage. Les préformes requises pour l'ensemble des cavités de moulage d'une unité 1 de moulage sont chargées sur un ou sur plusieurs bras auxiliaires de ladite unité 1 de moulage. Les préformes préchargées sur l'unité 1 de moulage sont introduites en parallèle dans la cavité de moulage correspondante. Avantageusement, les récipients moulés 10 par chacune des cavités de moulage sont évacués par la même roue 9 d'évacuation vers une ou plusieurs goulottes d'évacuation 11. Les différentes préformes correspondant à la même unité 1 de moulage peuvent former une grappe de préformes. Il en est éventuellement de même pour les différents récipients moulés issus des cavités de la même unité 1 de moulage.

Selon une autre variante, le récipient 10 obtenu par moulage est issu de plusieurs pièces préchargées sur l'unité 1 de moulage. Au moins l'une de ces pièces en un matériau synthétique est une préforme destinée à être soufflée ou étirée-soufflée. La ou les autres pièces préchargées peuvent être en un autre matériau synthétique ou métallique et sont intimement associées au matériau synthétique de la préforme lors du soufflage.

## Revendications

1. Machine de fabrication de récipients (10) par soufflage ou étirage/soufflage d'une préforme (5), comprenant :
- un carrousel (2) entraînant une pluralité d'unités (1) de moulage, chacune des unités (1) de moulage présentant un moyen (27) de capture d'une préforme ;
- un moyen (46, 4) d'amenée apte à amener des préformes (5) jusqu'au moyen (27) de capture des unités (1) de moulage passant par une position (1c, 21) dédiée au chargement en préforme ; et
- un moyen (43, 9) d'évacuation des récipients (10) venant d'être moulés hors de la cavité (12) de moulage des unités de moulage lorsque ces dernières passent par une position (1a, 21) dédiée au déchargement des récipients ;
**caractérisée en ce que** chaque unité (1) de moulage présente un moyen de positionnement apte à transférer la préforme capturée dans une cavité (12) de moulage de ladite unité de moulage lorsque cette dernière passe par une position (1b, G) dédiée au début de moulage, et **en ce que** le moyen (46, 4) d'amenée est disposé de manière que la position (1c, 20) dédiée au chargement en préforme (5) corresponde à une position (1pc) de préchargement en étant située à l'intérieur d'un secteur (41) de moulage s'étendant depuis la position (1b, G) de début de moulage jusqu'à la position (1a, 21) dédiée au déchargement des récipients (10), dans le sens d'entraînement du carrousel.

2. Machine selon la revendication 1, dans laquelle le moyen de positionnement de chaque unité de moulage comprend un bras (44, 15) auxiliaire à l'extrémité duquel est situé le moyen (27) de capture de ladite unité de moulage, laquelle extrémité est mobile au moins entre une position de préchargement et une position de moulage.

3. Machine selon la revendication 2, dans laquelle la cavité (12) de moulage de chaque unité (1) de moulage présente un axe (17) principal et un plan de joint (19) de la cavité (12) de moulage sensiblement perpendiculaire à une trajectoire d'entraînement (18) du carrousel à l'endroit de ladite unité (1) de moulage.

4. Machine selon la revendication 3, dans laquelle le bras (15) auxiliaire est mobile en rotation autour d'un axe (15a) auxiliaire, à distance du plan de joint (19) de la cavité (12) de moulage et parallèle à l'axe (17) principal de la cavité (12) de moulage.

5. Machine selon la revendication 4, dans laquelle le bras (15) auxiliaire est non télescopique, l'axe (15a) de rotation du bras (15) auxiliaire étant situé dans un plan, perpendiculaire au plan de joint (19) de la cavité (12) de moulage, et passant par l'axe (17) principal de la cavité (12) de moulage.

6. Machine selon l'une des revendications 2 à 5, dans laquelle le bras (15) auxiliaire est situé en amont de la cavité (12) de moulage dans le sens d'entraînement du carrousel (2).

7. Machine selon l'une des revendications 2 à 6, dans laquelle le bras (15) auxiliaire comprend un mécanisme de pinces dissymétriques comportant une grande branche (28) munie d'une forme de capture (29) de la préforme (5) et une petite branche (31), lesquelles grande et petite branches forment des prolongements de deux côtés opposés d'un parallélogramme déformable entre une configuration d'ouverture où la petite branche (31) ne fait pas obstacle à l'introduction de la préforme (5) dans la forme de capture (29) et une configuration de fermeture où la petite branche (31) plaque la préforme (5) dans la forme de capture (29).

8. Machine selon l'une des revendications 2 à 7, dans laquelle le moyen d'amenée des préformes est une roue d'amenée (4) équipée d'une pluralité de bras (6) terminés chacun par un moyen (7) de capture d'une préforme (5), lequel moyen (7) de capture est conçu pour coopérer avec le moyen (27) de capture d'une unité de moulage lorsque cette dernière est en position (20) de chargement en préforme.

9. Machine selon l'une des revendications précédentes, dans laquelle chaque unité (1) de moulage comprend un moyen de tenue des préformes (5) en position de moulage, lequel moyen de tenue est apte à coopérer avec le moyen de positionnement pour recevoir la préforme et libérer le moyen de capture et à coopérer avec le moyen (43, 9) d'évacuation pour relâcher le récipient (10).

10. Machine selon la revendication 9, dans laquelle les unités (1) de moulage sont aptes à ne pas déformer un col (37) des préformes (5) au cours de la transformation des préformes (5) en récipients (10), et dans laquelle le moyen de tenue présente une complémentarité de forme avec ledit col (37).

11. Machine selon la revendication 9 ou 10, dans laquelle le moyen de tenue est constitué par des formes ménagées dans la cavité (12) de moulage.

12. Machine selon la revendication 9, comprenant une roue (9) d'évacuation équipée d'une pluralité de bras (26) terminés chacun par un moyen de capture (27) de récipient moulé (10), chacun des bras (26) étant télescopique entre une position sortie et une position rentrée, et dans laquelle la roue (4) d'amenée est disposée plus proche de la roue (9) d'évacuation du côté amont de ladite roue (9) d'évacuation que du coté aval de ladite roue (9) d'évacuation.

13. Procédé de fabrication de récipient utilisant une pluralité d'unités (1) de moulage, procédé dans lequel on extrait d'une unité (1) de moulage le récipient moulé (10), puis on introduit une préforme (5) dans la même unité de moulage pour mouler le récipient suivant, **caractérisé en ce que** l'on précharge sur ladite unité (1) de moulage la préforme (5) du récipient suivant avant d'extraire le récipient moulé précédemment (10).

14. Procédé selon la revendication 13, dans lequel le préchargement d'une préforme (5) utilise un bras (15) auxiliaire équipant l'unité (1) de moulage correspondante dans une position (1c, A') de préchargement du bras, et dans lequel avant que l'unité (1) de moulage arrive en position (1b) de début de moulage, on déplace le bras (15) auxiliaire pour amener la préforme (5) dans la cavité (12) de moulage et on ramène le bras (15) auxiliaire dans la position (A') de préchargement du bras après le début de moulage et avant que l'unité (1) de moulage n'arrive de nouveau dans une position (1pc) de préchargement.

15. Procédé selon la revendication 14, dans lequel l'extraction du récipient moulé utilise un moyen (9) d'évacuation et dans lequel on amène le bras (15) auxiliaire dans une position (1e, B') d'évitement plus amont, dans le sens d'entraînement du carrousel, que la position (1c, A') de préchargement du bras, afin de faciliter l'accès du moyen (9) d'évacuation au récipient (10) à extraire.

## Patentansprüche

1. Maschine zur Fertigung von Behältern (10) durch Blasformung oder Streckblasformung einer Vorform (5), umfassend:
- ein Karussell (2), das eine Vielzahl von Formungseinheiten (1) bewegt, wobei jede der Formungseinheiten (1) eine Einrichtung (27) zur Aufnahme einer Vorform aufweist;
- eine Zufuhreinrichtung (46, 4), die geeignet ist, Vorformen (5) über eine Position (1c, 21) zum Beladen mit Vorformen der Einrichtung (27) zur Aufnahme der Formungseinheiten (1) zuzuführen; und
- eine Einrichtung (43, 9) zur Abfuhr der geformten Behälter (10) aus dem Hohlraum (12) zur Formung der Formungseinheiten, wenn Letztere eine Position (1a, 21) zum Entladen der Behälter passieren;
**dadurch gekennzeichnet, dass** jede Formungseinheit (1) ein Positionierungseinrichtung aufweist, die geeignet ist, die aufgenommene Vorform in einen Hohlraum (12) zur Formung der Formungseinheit zu transferieren, wenn diese eine Formungsstartposition (1b, G) passiert, und dass die Zufuhreinrichtung (46, 4) so angeordnet ist, dass die Position (1c, 20) zum Beladen mit Vorformen (5) einer Vorladeposition (1pc) entspricht, die sich innerhalb eines Formungsabschnitts (41) befindet, der sich in der Bewegungsrichtung des Karussells von der Formungsstartposition (1b, G) bis zur Position (1a, 21) zum Entladen der Behälter (10) erstreckt.

2. Maschine nach Anspruch 1, wobei die Einrichtung zur Positionierung jeder Formungseinheit einen Hilfsarm (44, 15) umfasst, an dessen Ende sich die Einrichtung (27) zur Aufnahme der Formungseinheit befindet, wobei das Ende zumindest zwischen einer Vorladeposition und einer Formungsposition bewegbar ist.

3. Maschine nach Anspruch 2, wobei der Formungshohlraum (12) jeder Formungseinheit (1) eine Hauptachse (17) und eine Verbindungsebene (19) des Formungshohlraums (12), die im Wesentlichen senkrecht zu einer Bewegungsbahn (18) des Karussells an der Stelle der Formungseinheit (1) ist, aufweist.

4. Maschine nach Anspruch 3, wobei der Hilfsarm (15) um eine Hilfsachse (15a) von der Verbindungsebene (19) des Formungshohlraums (12) beabstandet und parallel zur Hauptachse (17) des Formungshohlraums (12) drehbar ist.

5. Maschine nach Anspruch 4, wobei der Hilfsarm (15) nicht teleskopisch ist, wobei die Rotationsachse (15a) des Hilfsarms (15) in einer zur Verbindungsebene (19) des Formungshohlraums (12) senkrechten Ebene angeordnet ist und durch die Hauptachse des Formungshohlraums (12) verläuft.

6. Maschine nach einem der Ansprüche 2 bis 5, wobei sich der Hilfsarm (15) in der Bewegungsrichtung des Karussells (2) stromaufwärts zum Formungshohlraum (12) befindet.

7. Maschine nach einem der Ansprüche 2 bis 6, wobei der Hilfsarm (15) einen asymmetrischen Greifmechanismus umfasst, der einen großen Schenkel (28) mit einer Form (29) zur Aufnahme der Vorform (5) und einen kleinen Schenkel (31) umfasst, wobei der große und der kleine Schenkel Verlängerungen zweier gegenüberliegender Seiten eines Parallelogramms ausbilden, das zwischen einer offenen Stellung, in welcher der kleine Schenkel (31) kein Hindernis für die Einführung der Vorform (5) in die Aufnahmeform (29) darstellt, und einer geschlossenen Stellung, in welcher der kleine Schenkel (31) die Vorform (5) in die Aufnahme form (29) drückt, verformbar ist.

8. Maschine nach einem der Ansprüche 2 bis 7, wobei die Einrichtung zur Zufuhr der Vorformen ein Zufuhrrad (4) ist, das mit einer Vielzahl von Armen (6) ausgestattet ist, an deren Ende sich jeweils eine Einrichtung (7) zur Aufnahme einer Vorform (5) befindet, wobei die Aufnahmeeinrichtung (7) so gestaltet ist, dass sie mit der Einrichtung (27) zur Aufnahme einer Formungseinheit zusammenwirkt, wenn sich Letztere in einer Position (20) zum Beladen mit Vorformen befindet.

9. Maschine nach einem der vorangehenden Ansprüche, wobei jede Formungseinheit (1) eine Einrichtung zum Halten der Vorformen (5) in einer Formungsposition umfasst, wobei die Halteeinrichtung geeignet ist, mit der Positionierungseinrichtung zusammenzuwirken, um die Vorform aufzunehmen und die Aufnahmeeinrichtung freizugeben, und mit der Abfuhreinrichtung (43, 9) zusammenzuwirken, um den Behälter (10) loszulassen.

10. Maschine nach Anspruch 9, wobei die Formungseinheiten (1) so gestaltet sind, dass sie während der Verformung der Vorformen (5) zu Behältern (10) einen Hals (37) der Vorformen (5) nicht verformen, und wobei die Halteeinrichtung mit dem Hals (37) formschlüssig ist.

11. Maschine nach Anspruch 9 oder 10, wobei die Halteeinrichtung durch Formen ausgebildet ist, die im Formungshohlraum (12) angeordnet sind.

12. Maschine nach Anspruch 9, umfassend ein Abfuhrrad (9), das mit einer Vielzahl von Armen (26) ausgestattet ist, an deren Ende sich jeweils eine Einrichtung (27) zur Aufnahme eines Formbehälters (10) befindet, wobei jeder der Arme (26) zwischen einer ausgefahrenen Position und einer eingefahrenen Position teleskopisch bewegbar ist und wobei das Zufuhrrad (4) auf der stromaufwärtigen Seite des Abfuhrrads (9) näher zum Abfuhrrad angeordnet ist als auf der stromabwärtigen Seite des Abfuhrrads (9).

13. Verfahren zur Behälterfertigung unter Verwendung einer Vielzahl von Formungseinheiten (1), wobei der geformte Behälter (10) aus einer Formungseinheit (1) entnommen und anschließend zum Formen des nächsten Behälters eine Vorform (5) in dieselbe Formungseinheit eingeführt wird, **dadurch gekennzeichnet, dass** die Vorform (5) des nächsten Behälters an der Formungseinheit (1) vorgeladen wird, bevor der zuvor geformte Behälter (10) entnommen wird.

14. Verfahren nach Anspruch 13, wobei zum Vorladen einer Vorform (5) ein Hilfsarm (15), mit dem die entsprechende Formungseinheit (1) ausgestattet ist, in einer Vorladeposition (1c, A') des Arms verwendet wird, und wobei der Hilfsarm (15) bewegt wird, um die Vorform (5) in den Formungshohlraum (12) zu bringen, bevor die Formungseinheit (1) in die Formungsstartposition (1b) gelangt, und wobei der Hilfsarm (15) in die Vorladeposition (A') des Arms zurückbewegt wird, nachdem die Formung begonnen hat und bevor die Formungseinheit (1) erneut in eine Vorladeposition (1pc) gelangt.

15. Verfahren nach Anspruch 14, wobei zur Entnahme des geformten Behälters eine Abfuhreinrichtung (9) verwendet wird und wobei der Hilfsarm (15) in eine Ausweichposition (1e, B') gebracht wird, die sich in der Bewegungsrichtung des Karussells weiter stromaufwärts als die Vorladeposition (1c, A') des Arms befindet, um den Zugriff der Abfuhreinrichtung (9) auf den entnehmenden Behälter (10) zu erleichtern.

## Claims

1. Machine for manufacturing containers (10) by blow molding or stretch blow molding a perform (5), comprising:
- a carousel (2) which drives a plurality of molding units (1) presenting means (27) for catching a preform;
- a feeding means (46, 4) for feeding preforms (5) to the catching means (27) of the molding units (1) passing through a loading position (1c, 21) dedicated to preform loading; and
- an evacuation means (43, 9) for removing the freshly molded containers (10) from the mold cavity (12) of the molding units when said units pass through a position (1a, 21) dedicated to unloading the containers;
**wherein** each molding unit (1) presents a positioning device for transferring the caught preform in a mold cavity (12) of said molding unit when the latter passes through a position (1b, G) which is dedicated to the start of the molding, and wherein the feeding means (46, 4) is arranged so that the loading position (1c, 20) dedicated to preform (5) loading corresponds to a preloading position (1pc) by being inside a molding sector (41) that extends from the molding start position (1b, G) to the position (1a, 21) dedicated to unloading of container (10), in the direction in which the carousel advances.

2. Machine according to claim 1, wherein the positioning device for each molding unit comprises an auxiliary arm (44, 15) at the end of which is positioned the catching device (27) for said molding unit, said end being movable at least between a preloading position and a molding position.

3. Machine according to claim 4, wherein the mold cavity (12) of each molding unit (1) has a main axis (17) and a parting plane (19) of the mold cavity (12) which is substantially perpendicular to a path (18) of the carousel at the location of said molding unit (1).

4. Machine according to claim 3, wherein the auxiliary arm (15) rotates around an auxiliary axis (15a), at a distance from the parting plan (19) of the mold cavity (12) and parallel to the main axis (17) of the mold cavity (12).

5. Machine according to claim 4, wherein the auxiliary arm (15) is not telescopic, the axis of rotation (15a) of the auxiliary arm (15) being located in a plane perpendicular to the parting plane (19) of the mold cavity (12) and passing through the main axis (17) of the mold cavity (12).

6. Machine according to any one of claims 2 to 5, wherein the auxiliary arm (15) is located upstream from the mold cavity (12) relative to the driving direction of the carousel (2).

7. Machine according to any one of claims 2 to 6, wherein the auxiliary arm (15) comprises an asymmetrical claw mechanism comprising a large stem (28) equipped with a preform (5) catching shape (29) and a small stem (31), both large and small stems forming extensions of the two opposing sides of a deformable parallelogram which can be reshaped between an open configuration in which the small stem (31) does not prevent the preform (5) from entering the catching shape (29) and a closed configuration in which the small stem (31) presses the preform (5) inside the catching shape (29).

8. Machine according to any one of claims 2 to 7, wherein the preform feeding means is a feeding wheel (4) equipped with a plurality of arms (6) each having a preform (5) catching device (7) at its end, said catching device (7) being designed to cooperate with the catching device (27) of a molding unit when said unit is in the preform loading position (20).

9. Machine according to any one of preceding claims, wherein each molding unit (1) comprises a perform holding means which maintains preforms (5) in the molding position, said holding means cooperating with the positioning device to receive the preform and free the catching device, and cooperating with the evacuation means (43, 9) to release the container (10).

10. Machine according to claim 9, wherein the molding unit (1) does not deform the neck (37) of preforms (5) during the transformation of said preforms (5) into containers (10), and wherein the holding means has a shape complementary to that of said neck (37).

11. Machine according to claim 9 or 10, wherein the holding means consists of shapes arranged in the mold cavity (12).

12. Machine according to claim 9, comprising a discharge wheel (9) equipped with a plurality of arms (26), each having a molded container (10) grasping device (27) at its end, each arm (26) telescoping between an extended position and a retracted position, and wherein the feeding wheel (4) is arranged closer to the discharge wheel (9) on the upstream side of said discharge wheel (9) than on the downstream side of said discharge wheel (9).

13. Container manufacturing method using a plurality of molding units (1), wherein a molded container (10) is removed from a molding unit (1) and a preform (5) is then inserted in the same molding unit in order to mold the next container, **characterized by** the preform (5) for the next container being preloaded onto said molding unit (1) before the previously molded container (10) has been removed.

14. Method according to claim 13, wherein the preform (5) is preloaded using an auxiliary arm (15) equipping the corresponding molding unit (1) in an arm preloading position (1c, A'), and wherein before the molding unit (1) reaches the molding start position (1b), the auxiliary arm (15) is moved to bring the preform (5) in the mold cavity (12) and the auxiliary arm (15) returns to the preloading position (A') after the molding begins and before the molding unit (1) arrives once again at a preloading position (1pc).

15. Method according to claim 14, wherein the removal of the molded container uses an evacuation means (9) and wherein the auxiliary arm (15) is brought to an out-of-the-way position
(1e, B') farther upstream, in the driving direction of the carousel, than the arm preloading position (1c, A'), in order to facilitate access to the container (10) to be removed by the evacuation means (9).
